# EUROPÄISCHE PATENTSCHRIFT

(11) **EP 1 610 049 B1**
(45) Veröffentlichungstag und Bekanntmachung des Hinweises auf die Patenterteilung: **11.03.2009**
(21) Anmeldenummer: 05103614.3
(22) Anmeldetag: 02.05.2005
(51) Int. Cl.: F16L 53/00

(54) **Schlauchverbindungssystem für einen beheizbaren Schlauch**
Hose connecting system for a heatable hose
Système de raccordement pour un tuyau chauffable

(30) Priorität: 03.05.2004 DE 102004021667
(43) Veröffentlichungstag der Anmeldung: 28.12.2005
(73) Patentinhaber: ContiTech Techno-Chemie GmbH, 61184 Karben (DE)
(72) Erfinder: Scheuermann, Stefan J., 60439, Frankfurt/Main (DE); Kirsch, Christof, 61194, Niddatal (DE)
(74) Vertreter: Finger, Karsten

(56) Entgegenhaltungen:
- EP-A- 0 080 811
- US-A- 3 314 039
- US-A- 3 553 629

## Beschreibung

Die Erfindung betrifft einen beheizbaren Schlauch, der wenigstens einen zur Erwärmung eines im Schlauch fließenden Mediums dienenden elektrischen Heizleiter aufweist, wobei die Enden des Heizleiters mit einer vorgegebenen Länge am Schlauchende freigelegt sind, mit einem Schlauchverbindungssystem.

Ein beheizbarer Schlauch mit wenigstens einem zur Erwärmung eines im Schlauch fließenden Mediums dienenden elektrischen Heizleiter ist beispielsweise aus der DE 102 01 920 A1 bekannt, wobei sich der Heizleiter über zumindest einen Teilbereich der Schlauchlänge erstreckt und aus einer metallischen Seele und einer Ummantelung besteht. Diese Schrift offenbart die Merkmale des Oberbegriffs des Anspruchs 1.

Der Heizleiter ist üblicherweise in einer Schicht des Schlauches eingebettet. Bei einem mehrschichtigen Schlauch kann der Heizleiter auch zwischen zwei Schichten angeordnet sein. Die Enden des Heizleiters sind freigelegt, um sie an eine zum Betreiben des Heizleiters erforderliche Spannungsquelle anschließen zu können. Üblicherweise sind die freigelegten Enden des Heizleiters an einem Ende des Schlauches angeordnet. Es ist aber auch möglich, dass jeweils ein freigelegtes Ende des Heizleiters an einem Ende des Schlauches angeordnet ist.

Die freigelegten Enden werden zu einer elektrischen Anschlussvorrichtung geführt und mit dieser verbunden. An die Anschlussvorrichtung kann dann eine Spannungsquelle angeschlossen werden. Da die Spannungsquelle üblicherweise nicht direkt am Schlauch angeordnet ist, müssen die freigelegten Enden des Heizleiters eine vorgegebene Länge aufweisen, um sie über die Anschlussvorrichtung an die Spannungsquelle anschließen zu können.

Nachteilig daran ist, dass die eine vorgegebene Länge aufweisenden freigelegten Enden des Heizleiters ab ihrem Austritt aus dem Schlauch bis zu ihrem Anschluss an die Anschlussvorrichtung nahezu vollkommen ungeschützt sind. Da sich die Heizleiter während ihres Betriebes erwärmen, stellen die ungeschützten freigelegten Enden des Heizleiters ein Sicherheitsrisiko dar.

Aus der DE 28 27 649 C2 ist ein weiterer beheizbarer Schlauch bekannt, in dessen Mantel zwei elektrische Leiter isoliert voneinander wendelförmig unter Bildung eines Außengewindcs angeordnet sind. Auf die Schlauchenden ist jeweils eine ein entsprechendes Innengewinde aufweisende Verbindungsmanschette aufgeschraubt. Jede Verbindungsmanschette umfasst einen den Mediumsströmungsquerschnitt nicht beeinträchtigenden Ansatz, in dem die Enden der elektrischen Leiter des Schlauches durch Verbindungsstücke, insbesondere durch Drahtklemmverbindungsstücke, mit den Enden der elektrischen Leiter eines Anschlusskabel verbunden sind.

Nachteilig an einem derartigen Schlauch ist, dass die Verbindungsmanschette auf das Ende des Schlauches aufgeschraubt werden muss. Da hierbei die elektrischen Leiter, die aus einer metallischen Seele und einer elektrisch isolierenden Ummantelung bestehen, selbst das Außengewinde bilden, besteht ein erhöhtes Risiko, dass die Ummantelung beim Aufschrauben der Verbindungsmanschette verletzt und durch Überkreuzen der elektrischen Leiter ein Kurzschluss verursacht wird.

Darüber hinaus hat sich als Nachteil herausgestellt, dass das Verbindungsstück unmittelbar in der Verbindungsmanschette und damit direkt am Schlauchende angeordnet ist. Ein derart angeordnetes Verbindungsstück ist für Reparaturen, beispielsweise wegen defekter elektrischer Kontaktierung nur schwer zugänglich, insbesondere wenn der Schlauch in einer Vorrichtung, beispielsweise einem Kraftfahrzeug, an schwer zugänglicher Stelle eingebaut ist.

Aus der US-A-3553629 ist ein Schlauch für einen Staubsauger bekannt, der über seine Länge mit elektrischen Leitern versehen ist, dessen aus dem Schlauchende herausragenden Enden in einer Schutz- und Steckkappe an den Fittings am Schlauchende angeordnet steckbereit liegen. Eine Beheizbarkeit des Schlauches ist über diesen elektrischen Leiter nicht vorgesehen. Die elektrischen Leiter und ihre Endkontakte sollen das jeweilige Schlauchende einerseits mit einem Staubsauger und andererseits mit einem motorbetriebenen Bodenreinigungsgerät verbunden.

Der Erfindung liegt die Aufgabe zugrunde, einen beheizbaren Schlauch, insbesondere Druckschlauch, mit wenigstens einem zur Erwärmung eines im Schlauch fließenden Mediums dienenden elektrischen Heizleiter bereitzustellen, der ein Schlauchverbindungssystem aufweist, das den Schutz der freigelegten Enden des Heizleiter über eine vorgegebene Länge ab ihrem Austritt aus dem Schlauch bis zu ihrem Anschluss an eine Anschlussvorrichtung gewährleistet.

Diese Aufgabe wird durch einen beheizbaren Schlauch mit den Merkmalen des Anspruchs 1 gelöst. Weiterbildungen und vorteilhafte Ausgestaltungen der Erfindung ergeben sich aus den Unteransprüchen.

Der beheizbare Schlauch, der wenigstens einen zur Erwärmung eines im Schlauch fließenden Mediums dienenden elektrischen Heizleiter aufweist, wobei die Enden des Heizleiters mit einer vorgegebenen Länge am Schlauchende freigelegt sind, mit einem Schlauchverbindungssystem umfasst erfindungsgemäß
a) ein Rohrstück, das bis zu einem den Durchmesser der Rohrstücksöffnung reduzierenden Rohrstücksanschlag auf das Schlauchende aufsteckbar ist, wobei
   i) der Durchmesser der nicht aufsteckbaren Öffnung des Rohrstücks kleiner als der Außendurchmesser des Schlauchendes ist, und
   ii) der Mantel des Rohrstücks derart mit einem im Winkel zur Längsachse des Rohrstücks angeordneten, rohrförmigen Stutzen verbunden ist, dass in diesem die freigelegten Enden des Heizleiters führbar sind, wobei der Mantel einen Durchlass zum Stutzen aufweist, sowie
b) ein rohrförmiges Verbindungsstück, das derart ausgebildet ist, dass es mit seinem einem Endabschnitt durch die nicht aufsteckbare Öffnung des Rohrstücks geführt in die Öffnung des Schlauches einfügbar und befestigbar ist, wobei
   iii) das Rohrstück derart ausgebildet ist, dass es auf dem Verbindungsstück fixierbar ist, und das Verbindungsstück auf seiner Außenseite einen im Abstand vom einfügbaren Endabschnitt angeordneten umlaufenden Anschlag aufweist, der einen größeren Durchmesser als die nicht aufsteckbare Öffnung des Rohrstücks aufweist und der das Rohrstück im montierten Zustand des Schlauchverbindungssystems gegen das Schlauchende drückt und dort fixiert ,und
   iv) der andere Endabschnitt des rohrförmigen Verbindungsstücks derart ausgebildet ist, dass er mit einem weiteren rohrförmigen Anschluss verbindbar ist.

Durch ein derartiges für einen beheizbaren Schlauch, insbesondere beheizbaren Druckschlauch, ausgebildetes Schlauchverbindungssystem wird im montierten Zustand des Schlauchverbindungssystems erreicht, dass die am Schlauchende über eine vorgegebene Länge freigelegten Enden des Heizleiters sofort nach ihrem Austritt aus dem Schlauch bis zu ihrem Anschluss an eine Anschlussvorrichtung nicht freiliegen, sondern geschützt in dem mit dem Rohrstück verbundenen Stutzen geführt sind.

Dabei wird die eigentliche Mediumsweiterleitung in den oder aus dem Schlauch in einen oder aus einem weiteren rohrförmigen Anschluss durch das in das Schlauchende eingefügte Verbindungsstück erreicht, das gleichzeitig derart ausgebildet ist, dass es die Fixierung des Rohrstücks am Schlauchende gewährleistet. Hierzu ist der in das Schlauchende eingefügte Endabschnitt des Verbindungsstücks erfindungsgemäß ausgebildet. Der andere Endabschnitt des Verbindungsstücks kann dagegen eine dem Fachmann bekannte Ausbildung eines Rohr- oder Schlauchverbinders haben. Der Fachmann wird hierzu in Abhängigkeit von der Ausbildung des Weiteren rohrförmigen Anschlusses eine geeignete Anschlussform des anderen Endabschnitts wählen. Der andere Endabschnitt kann beispielsweise als Tülle, als Muffe mit Innen- und/oder Außengewinde oder als eine dem Fachmann bekannte Schnellverschlusskupplung ausgebildet sein.

Eine Weiterbildung der Erfindung sieht vor, dass das Rohrstück öffen- und schließbar ist und auf dem Verbindungsstück durch Aufclipsen fixierbar ist. Dadurch wird erreicht, dass zunächst die mediumsweiterleitende Verbindung zwischen dem beheizbaren Schlauch und einem weiteren rohrförmigen Anschluss hergestellt werden kann. Erst anschließend wird das Rohrstück aufgeclipst und die freigelegten Enden des Heizleiters in den mit dem Rohrstück verbundenen Stutzen bis zu einer elektrischen Anschlussvorrichtung geführt.

Weiterhin ist vorgesehen, dass der den Durchmesser der nicht aufsteckbaren Rohrstücksöffnung reduzierende Rohrstücksanschlag durch einen im Rohrstück angeordneten Distanzring und/oder durch einen radial nach innen gestülpten Rand des Rohrstücks gebildet ist.

Der die freigelegten Enden des Heizleiters schützende Stutzen kann stoffschlüssig, also einstückig, oder kraftschlüssig, insbesondere durch Aufclipsen, mit dem Mantel verbunden.

Um einen sicheren Schutz der freigelegten Enden des Heizleiters zu gewährleisten, ist die Länge des Stutzens der vorgegebenen Länge der freigelegten Enden des Heizleiters angepasst.

Eine Weiterbildung der Erfindung sieht vor, dass der Stutzen mehrteilig ausgebildet ist, wobei die einzelnen Teile vorzugsweise durch eine Clipverbindung miteinander verbunden sind. Dadurch kann der Stutzen unterschiedlichen Gegebenheiten schnell angepasst werden. Beispielsweise kann der Stutzen einfacher der vorgegebenen Länge der freigelegten Enden des Heizleiters angepasst werden, wobei die einzelnen Teile des Stutzen eine unterschiedliche Form haben und/oder unterschiedlichen Materialen bestehen können. Außerdem können die freigelegten Enden des Heizleiters einfacher in den Stutzen eingefügt werden, wenn dieser in Teilen aufgebaut wird.

Das vom Mantel abgewandte Ende des Stutzens weist vorzugsweise eine elektrische Anschlussvorrichtung auf, an welche die im Stutzen geführten freigelegten Enden des Heizleiters anschließbar sind.

Weiterhin ist vorgesehen, dass der Stutzen der Länge nach wenigstens einen Trennsteg aufweist, welcher die im Stutzen geführten Heizleiter voneinander trennt. Dadurch wird verhindert, dass sich die freigelegten Enden des Heizleiters überkreuzen und - sofern ihre Isolierung beschädigt ist - zu einem Kurzschluss führen.

Vorzugsweise ist das dem Mantel zugewandte Ende des Stutzens im 90°-Winkel zur Längsachse des Rohrstücks mit dem Mantel verbunden. Dadurch wird die mediumsweiterleitende Verbindung zwischen dem Schlauch und einem weiteren rohrförmigen Anschluss am wenigsten beeinträchtigt.

Der Stutzen ist vorzugsweise im montierten Zustand nach Art eines 45°- oder 90°-Winkelstücks ausgebildet. Dadurch können die Enden des Heizleiters zu einer über dem Schlauch angeordneten elektrischen Anschlussvorrichtung geführt werden.

Einer Weiterbildung der Erfindung sieht vor, dass der Stutzen wenigstens teil- bzw. abschnittsweise flexibel ausgebildet ist. Dadurch wird erreicht, dass die im Stutzen angeordneten Enden des Heizleiters durch Biegen des Stutzens zu einer vorzugsweise über dem Schlauch angeordneten elektrischen Anschlussvorrichtung geführt werden können.

Der flexible Teil bzw. Abschnitt besteht vorzugsweise aus thermoplastischem Kautschuk. Besonders bevorzugt ist der flexible Teil bzw. Abschnitt als Spiralschlauch ausgebildet.

Das Rohrstück und/oder der Stutzen bestehen wenigstens teil- oder abschnittsweise vorzugsweise aus Polyamid 6.6.

Eine vorteilhafte Ausgestaltung der Erfindung sieht vor, dass das Schlauchverbindungssystem einen auf das Schlauchende aufschiebbaren Klemmring umfasst, der im montierten Zustand des Schlauchverbindungssystems den in das Schlauchende eingefügten Endabschnitt des Verbindungsstücks fixiert. Dadurch wird eine sichere Weiterleitung des Mediums, insbesondere wenn dieses unter Druck steht, gewährleistet.

Das Verbindungsstück ist vorzugsweise eine Druckschlauchtülle, wobei der im montierten Zustand des Schlauchverbindungssystems durch die nicht aufsteckbare Öffnung des Rohrstücks geführte Endabschnitt vorzugsweise als Sägezahntülle ausgebildet ist.

Nachfolgend wird die Erfindung anhand dreier Ausführungsbeispiele erläutert, die in der Zeichnung dargestellt sind. In dieser zeigen:
- Fig. 1: einen Schnitt längs der Linie A-A von Fig. 2 durch ein erstes Schlauchverbindungssystem im montierten Zustand,
- Fig. 2: eine Draufsicht auf die dem Schlauchende abgewandte Stirnseite des ersten Schlauchverbindungssystems im montierten Zustand,
- Fig. 3: eine perspektivische Ansicht des ersten Schlauchverbindungssystems im montierten Zustand,
- Fig. 4: einen Schnitt längs der Linie B-B von Fig. 5 durch das Rohrstück mit Stutzen des ersten Schlauchverbindungssystems,
- Fig. 5: eine Draufsicht auf die dem Schlauchende zugewandte Stirnseite des Rohrstücks mit Stutzen des ersten Schlauchverbindungssystems
- Fig. 6: eine perspektivische Ansicht des Rohrstücks mit Stutzen des ersten Schlauchverbindungssystems,
- Fig. 7: einen Schnitt längs der Linie A-A von Fig. 8 durch ein zweites Schlauchverbindungssystem im montierten Zustand,
- Fig. 8: eine Draufsicht auf die dem Schlauchende abgewandte Stirnseite des zweiten Schlauchverbindungssystems im montierten Zustand,
- Fig. 9: eine perspektivische Ansicht des zweiten Schlauchverbindungssystems im montierten Zustand,
- Fig. 10: einen Schnitt längs der Linie B-B von Fig. 12 durch das Rohrstück mit Stutzen des zweiten Schlauchverbindungssystems,
- Fig. 11: eine Seitenansicht des Rohrstücks mit Stutzen des zweiten Schlauchverbindungssystems,
- Fig. 12: eine Draufsicht auf die dem Schlauchende zugewandte Stirnseite des Rohrstücks mit Stutzen des zweiten Schlauchverbindungssystems,
- Fig. 13: eine perspektivische Ansicht des Rohrstücks mit Stutzen des zweiten Schlauchverbindungssystems,
- Fig. 14: eine Seitenansicht des Rohrstücks mit gebogenen Stutzen des zweiten Schlauchverbindungssystems,
- Fig. 15: eine Draufsicht auf die dem Schlauchende zugewandte Stirnseite des Rohrstücks mit gebogenen Stutzen des zweiten Schlauchverbindungssystems,
- Fig. 16: eine perspektivische Ansicht des Rohrstücks mit gebogenen Stutzen des zweiten Schlauchverbindungssystems,
- Fig. 17: einen Schnitt längs der Linie A-A von Fig. 18 durch ein drittes Schlauchverbindungssystem im montierten Zustand,
- Fig. 18: eine Draufsicht auf die dem Schlauchende abgewandte Stirnseite des dritten Schlauchverbindungssystems im montierten Zustand,
- Fig. 19: eine perspektivische Ansicht des dritten Schlauchverbindungssystems im montierten Zustand,
- Fig. 20: einen Schnitt längs der Linie B-B von Fig. 21 durch das Rohrstück mit einem ersten Teil des Stutzens des dritten Schlauchverbindungssystems,
- Fig. 21: eine Draufsicht auf die dem Schlauchende zugewandte Stirnseite des Rohrstücks mit dem ersten Teil des Stutzens des dritten Schlauchverbindungssystems,
- Fig. 22: eine Seitenansicht des Rohrstücks mit dem ersten Teil des Stutzen des dritten Schlauchverbindungssystems,
- Fig. 23: eine Draufsicht auf die Oberseite des Rohrstücks mit dem ersten Teil des Stutzens des dritten Schlauchverbindungssystems und
- Fig. 24: eine perspektivische Ansicht des Rohrstücks mit dem ersten Teil des Stutzens des dritten Schlauchverbindungssystems.

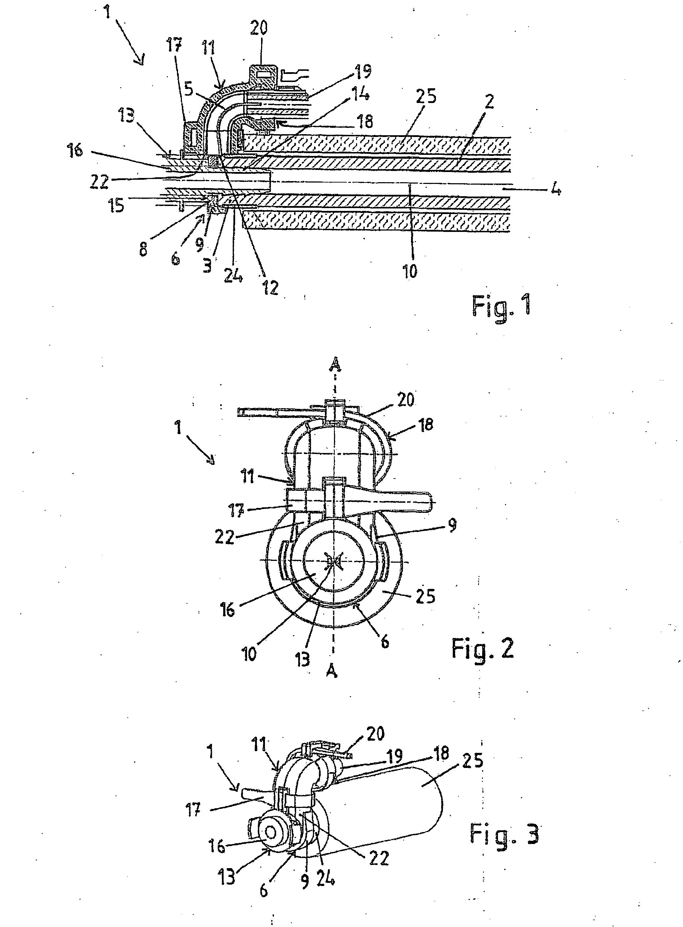

In den Fig. 1 bis 3 ist jeweils ein erstes Schlauchverbindungssystem 1 im montierten Zustand in verschiedenen Ansichten dargestellt.

Das Schlauchverbindungssystem 1 ist am Ende 3 eines beheizbaren Schlauches 2, der wenigstens einen zur Erwärmung eines im Schlauch 2 fließenden Mediums 4 dienenden elektrischen Heizleiter aufweist, montiert. Die Enden 5 des Heizleiters sind mit einer vorgegebenen Länge am Schlauchende 3 freigelegt. Der Schlauch 2 selbst ist von einer den Wärmeverlust gering haltenden Isolierung 25 umgeben. Das erfindungsgemäße Schlauchverbindungssystem 1 umfasst ein Rohrstück 6, das bis zu einem Anschlag 8, der als Distanzring innerhalb des Rohrstücks 6 ausgebildet ist, auf das Schlauchende 3 aufgesteckt ist.

Der Mantel 9 des Rohrstücks 6 ist stoffschlüssig, also einstückig, mit einem ersten Teil eines im 90°-Winkel zur Längsachse 10 des Rohrstücks 6 angeordneten, rohrförmigen Stutzens 11 verbunden, wobei der Mantel 9 des Rohrstücks 6 einen Durchlass 12 zum Stutzen 11 aufweist. Der erste Teil des Stutzens 11 ist über eine lösbare Clipverbindung 17, insbesondere durch eine Bindeschlaufe, mit einem zweiten Teil des Stutzens 11, der nach Art eines 90°-Winkelstücks ausgebildet ist, verbunden. Die beiden Teile des Stutzens 11 sind als Spritzgussteile ausgebildet und weisen daher eine starre Form auf.

Innerhalb des Stutzens 11 sind die freigelegten Enden 5 des Heizleiters geschützt angeordnet. Das vom Mantel 9 des Rohrstücks 6 abgewandte Ende 18 des zweiten Teils des Stutzens 11 weist eine elektrische Anschlussvorrichtung 19 in Form eines Steckers auf, an welche die im Stutzen 11 geschützt angeordneten freigelegten Enden 5 des Heizleiters angeschlossen sind. Hierbei sind das vom Mantel 9 abgewandte Ende 18 des Stutzens 11 und die elektrische Anschlussvorrichtung 19 durch eine lösbare Clipverbindung 20, insbesondere durch eine Bindeschlaufe, miteinander verbunden. Durch die Ausbildung des zweiten Teils des Stutzens 11 nach Art eines 90°-Winkelstücks können die Enden 5 des Heizleiters zurück zu einer über dem Schlauch 2 angeordneten elektrischen Anschlussvorrichtung 19 geführt werden.

Das erfindungsgemäße Schlauchverbindungssystem 1 umfasst außerdem ein rohrförmiges Verbindungsstück 13, das mit seinem einem als Sägezahntülle ausgebildeten Endabschnitt 14 durch die Öffnung des als Anschlag 8 ausgebildeten Distanzringes geführt in die Öffnung des Schlauchendes 3 eingefügt und durch die Sägezahntülle im Schlauchende 3 befestigt ist. Zur Befestigung des Endabschnitts 14 des Verbindungsstückes 13 im Schlauchende 3 ist zusätzlich ein Klemmring 24 auf das Schlauchende 3 aufgeschoben, der mit radialer Kraft beaufschlagt das Schlauchende 2 dicht auf die Sägezahntülle des Verbindungsstücks drückt. Dadurch wird eine sichere Verbindung zur Weiterleitung des im Schlauch 2 befindlichen Mediums 4 geschaffen. Vorzugsweise wird die Verbindung 17 zwischen dem ersten und dem zweiten Teil des Stutzens 11 erst hergestellt, nachdem der Klemmring 24 mit radialer Kraft beaufschlagt wurde, da der Klemmring 24 sonst nur schwer zugänglich wäre.

Das Verbindungsstück 13 weist außerdem auf seiner Außenseite einen im Abstand vom eingefügten Endabschnitt 14 angeordneten umlaufenden Verbindungsstückanschlag 15 auf, der einen größeren Außendurchmesser als die nicht aufgesteckte Öffnung 7 des Rohrstücksanschlags 8, also des Distanzringes, aufweist. Der Verbindungsstückanschlag 15 drückt das Rohrstück 6 des Schlauchverbindungssystems 1 gegen das Schlauchende 3 und hält es dort fest.

Der andere Endabschnitt 16 des rohrförmigen Verbindungsstücks 13 ist als Clipanschluss ausgebildet und lässt sich mit einem entsprechenden Gegenstück eines weiteren rohrförmigen Anschlusses zusammenfügen.

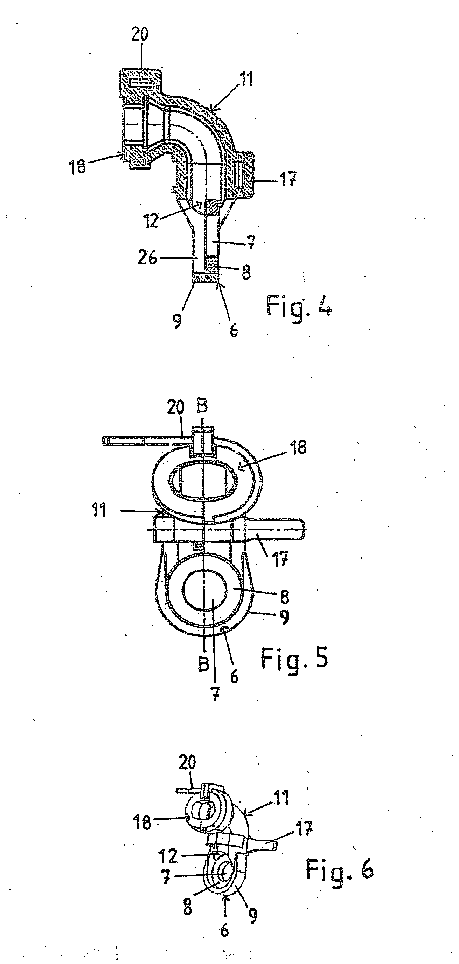

In den Fig. 4 bis 6 ist jeweils das mit dem Stutzen 11 verbundene Rohrstück 6 des in den Fig. 1 bis 3 gezeigten ersten Schlauchverbindungssystems 1 in verschiedenen Ansichten dargestellt.

Das Rohrstück 6 weist eine größere Öffnung 26 und eine kleinere Öffnung 7 auf. Mit der größeren Öffnung 26 ist das Rohrstück 6 bis zu dem Rohrstücksanschlag 8 auf das Schlauchende 3 aufsteckbar. Der den Durchmesser der nicht aufsteckbaren Rohrstücksöffnung 7 reduzierende Rohrstücksanschlag 8 wird durch einen im Rohrstück 6 angeordneten Distanzring gebildet.

Der Mantel 9 des Rohrstücks 6 ist stoffschlüssig mit dem im 90°-Winkel zur Längsachse 10 des Rohrstücks 6 angeordneten, rohrförmigen ersten Teil des Stutzens 11 verbunden, wobei der Mantel 9 einen Durchlass 12 zum Stutzen 11 aufweist. Der erste Teil des Stutzens 11 ist durch eine lösbare Clipverbindung 17, insbesondere durch eine Bindeschlaufe, mit einem zweiten nach Art eines 90°-Winkelstücks ausgebildeten Teil des Stutzens 11 verbunden. Beide Teile des Stutzens 11 bilden zusammen den Stutzen 11, wobei die Länge des Stutzens 11 der vorgegebenen Länge der freigelegten Enden 5 des Heizleiters angepasst ist.

Das vom Mantel 9 abgewandte Ende 18 des Stutzens 11 weist ebenfalls eine lösbare Clipverbindung 20, insbesondere eine Bindeschlaufe, vorzugsweise zum Verbinden mit einer elektrischen Anschlussvorrichtung 19 auf.

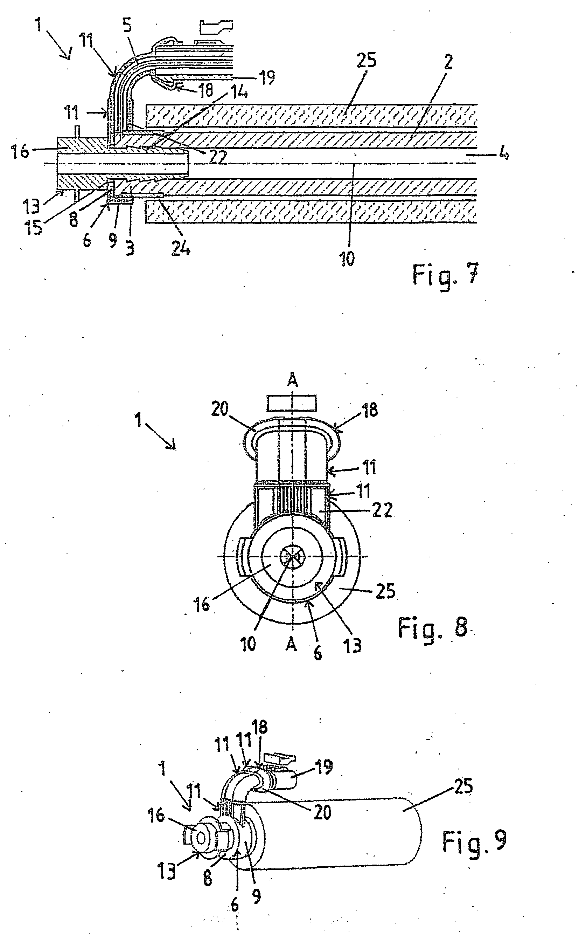

In den Fig. 7 bis 9 ist jeweils ein zweites Schlauchverbindungssystem 1 im montierten Zustand in verschiedenen Ansichten dargestellt.

Das Schlauchverbindungssystem 1 ist am Ende 3 eines beheizbaren Schlauches 2, der wenigstens einen zur Erwärmung eines im Schlauch 2 fließenden Mediums 4 dienenden elekt rischen Heizleiter aufweist, montiert. Die Enden 5 des Heizleiters sind mit einer vorgegebenen Länge am Schlauchende 3 freigelegt. Der Schlauch 2 selbst ist von einer den Wärmeverlust gering haltenden Isolierung 25 umgeben. Das erfindungsgemäße Schlauchverbindungssystem 1 umfasst ein Rohrstück 6, das bis zu einem Anschlag 8, der durch einen radial nach innen gestülpten Rand des Rohrstücks 6 gebildet ist, auf das Schlauchende 3 aufgesteckt ist.

Der Mantel 9 des Rohrstücks 6 ist mit einem im 90°-Winkel zur Längsachse 10 des Rohrstücks 6 angeordneten, rohrförmigen Stutzen 11 verbunden, wobei der Mantel 9 des Rohrstücks 6 einen Durchlass 12 zum Stutzen 11 aufweist. Der dem Mantel 9 nächstliegende Abschnitt des Stutzens 11 ist hierbei relativ starr ausgebildet, während der übrige Teil des Stutzens 11 flexibel biegbar ist und nach Art eines 90°-Winkelstücks zu der dem Schlauch 2 zugewandten Seite gebogen ist.

Innerhalb des Stutzens 11 sind die freigelegten Enden 5 des Heizleiters geschützt angeordnet. Das vom Mantel 9 des Rohrstücks 6 abgewandte Ende 18 des Stutzens 11 weist eine elektrische Anschlussvorrichtung 19 in Form eines Steckers auf, an welche die im Stutzen 11 geschützt angeordneten freigelegten Enden 5 des Heizleiters angeschlossen sind. Hierbei sind das vom Mantel 9 abgewandte Ende 18 des Stutzens 11 und die elektrische Anschlussvorrichtung 19 durch eine lösbare Clipverbindung 20 miteinander verbunden. Durch das Biegen des Stutzens 11 nach Art eines 90°-Winkelstücks können die Enden 5 des Heizleiters zu einer über dem Schlauch 2 angeordneten elektrischen Anschlussvorrichtung 19 geführt werden.

Das erfindungsgemäße Schlauchverbindungssystem 1 umfasst außerdem ein rohrförmiges Verbindungsstück 13, das wie in den Fig. 1 bis 3 ausgebildet ist, so dass hierzu auf die obige Beschreibung verwiesen wird, wobei gleiche Bezugsziffern gleiche Teile bezeichnen.

Wie schon bei dem ersten in den Fig. 1 bis 3 dargestellten Schlauchverbindungssystem 1 ist auch bei dem zweiten in den Fig. 7 bis 9 dargestellten Schlauchverbindungssystem 1 zusätzlich ein Klemmring 24 auf das Schlauchende 3 aufgeschoben, der mit radialer Kraft beaufschlagt das Schlauchende 2 dicht auf die Sägezahntülle des Verbindungsstücks 13 drückt. Vorzugsweise wird der Stutzen 11 erst dann nach Art eines 90°-Winkelstücks umgebogen, wenn der Klemmring 24 bereits mit radialer Kraft beaufschlagt wurde, da der Klemmring 24 sonst nur schwer zugänglich wäre.

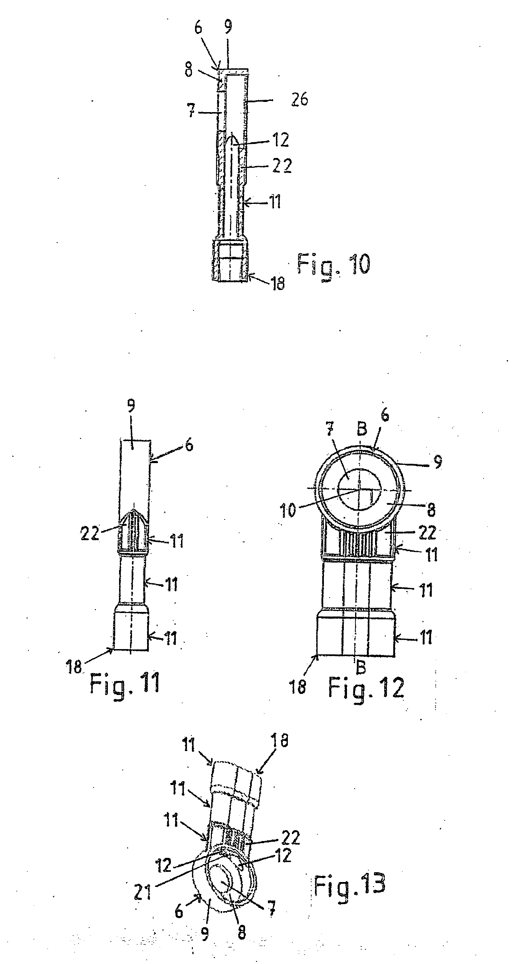

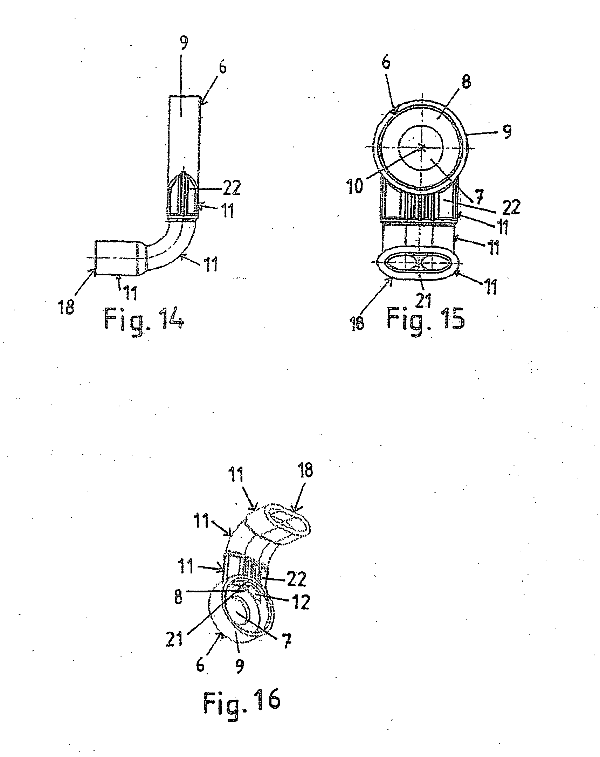

In den Fig. 10 bis 16 ist jeweils das mit dem Stutzen 11 verbundene Rohrstück 6 des in den Fig. 7 bis 9 gezeigten zweiten Schlauchverbindungssystems 1 in verschiedenen Ansichten dargestellt, wobei der flexible biegbare Stutzen 11 in den Fig. 10 bis 13 in gerader Ausführung und in den Fig. 14 bis 16 in gebogener Ausführung gezeigt wird.

Das Rohrstück 6 weist eine größere Öffnung 26 und eine kleinere Öffnung 7 auf. Mit der größeren Öffnung 26 ist das Rohrstück 6 bis zu dem Rohrstücksanschlag 8 auf das Schlauchende 3 aufsteckbar, wobei der Rohrstücksanschlag 8 durch den radial nach innen gestülpten Rand des Rohrstücks 6 gebildet wird.

Der Mantel 9 des Rohrstücks 6 ist mit einem im 90°-Winkel zur Längsachse 10 des Rohrstücks 6 angeordneten, rohrförmigen Stutzen 11 verbunden, wobei der Mantel 9 des Rohrstücks 6 einen Durchlass 12 zum Stutzen 11 aufweist. Der dem Mantel 9 nächstliegende Abschnitt des Stutzens 11 ist hierbei relativ starr ausgebildet, während der übrige Teil des Stutzens 11 flexibel biegbar ist.

Das vom Mantel 9 abgewandte Ende 18 des Stutzens 11 ist zur Herstellung einer lösbaren Clipverbindung 20, vorzugsweise zum Verbinden mit einer elektrischen Anschlussvorrichtung, aufgeweitet.

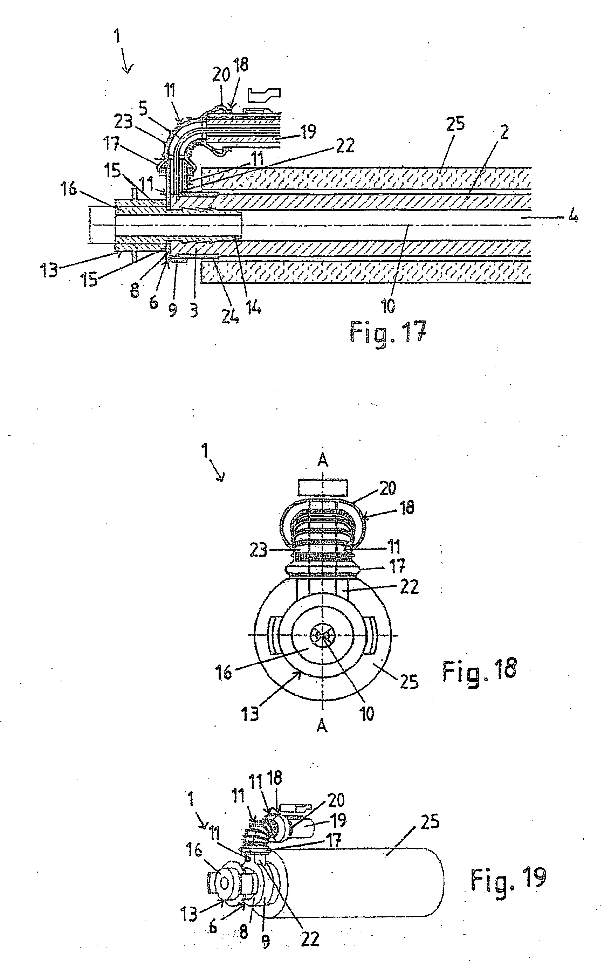

In den Fig. 17 bis 19 ist jeweils ein drittes Schlauchverbindungssystem 1 im montierten Zustand in verschiedenen Ansichten dargestellt.

Das Schlauchverbindungssystem 1 ist am Ende 3 eines beheizbaren Schlauches 2, der wenigstens einen zur Erwärmung eines im Schlauch 2 fließenden Mediums 4 dienenden elektrischen Heizleiter aufweist, montiert. Die Enden 5 des Heizleiters sind mit einer vorgegebenen Länge am Schlauchende 3 freigelegt. Der Schlauch 2 selbst ist von einer den Wär meverlust gering haltenden Isolierung 25 umgeben. Das erfindungsgemäße Schlauchverbindungssystem 1 umfasst ein Rohrstück 6, das bis zu einem Anschlag 8, der durch einen radial nach innen gestülpten Rand des Rohrstücks 6 gebildet ist, auf das Schlauchende 3 aufgesteckt ist.

Der Mantel 9 des Rohrstücks 6 ist stoffschlüssig, also einstückig, mit einem ersten Teil eines im 90°-Winkel zur Längsachse 10 des Rohrstücks 6 angeordneten, rohrförmigen Stutzens 11 verbunden, wobei der Mantel 9 des Rohrstücks 6 einen Durchlass 12 zum Stutzen 11 aufweist. Der erste Teil des Stutzens 11 ist starr ausgebildet und über eine lösbare Clipverbindung 17 mit einem zweiten Teil des Stutzens 11, nämlich einen flexiblen Spiralschlauch 23, der nach Art eines 90°-Winkelstücks gebogen ist, verbunden.

Innerhalb des Stutzens 11 sind die freigelegten Enden 5 des Heizleiters geschützt angeordnet. Das vom Mantel 9 des Rohrstücks 6 abgewandte Ende 18 des Spiralschlauchs 23 weist eine elektrische Anschlussvorrichtung 19 in Form eines Steckers auf, an welche die im Stutzen 11 geschützt angeordneten freigelegten Enden 5 des Heizleiters angeschlossen sind. Hierbei sind das vom Mantel 9 abgewandte Ende 18 des Stutzens 11 und die elektrische Anschlussvorrichtung 19 durch eine lösbare Clipverbindung 20 miteinander verbunden. Durch die gebogene Ausbildung des zweiten Teils des Stutzens 11 nach Art eines 90°-Winkelstücks können die Enden 5 des Heizleiters zu einer über dem Schlauch 2 angeordneten elektrischen Anschlussvorrichtung 19 geführt werden.

Das erfindungsgemäße Schlauchverbindungssystem 1 umfasst außerdem ein rohrförmiges Verbindungsstück 13, das wie in den Fig. 1 bis 3 ausgebildet ist, so dass hierzu auf die obige Beschreibung verwiesen wird, wobei gleiche Bezugsziffern gleiche Teile bezeichnen.

Wie schon bei dem ersten in den Fig. 1 bis 3 dargestellten Schlauchverbindungssystem 1 ist auch bei dem dritten in den Fig. 17 bis 19 dargestellten Schlauchverbindungssystem 1 zusätzlich ein Klemmring 24 auf das Schlauchende 3 aufgeschoben, der mit radialer Kraft beaufschlagt das Schlauchende 2 dicht auf die Sägezahntülle des Verbindungsstücks 13 drückt. Vorzugsweise wird der nach Art eines 90°-Winkelstücks gebogene Spiralschlauch 23 erst dann auf den ersten Teil des Stutzens 11 aufgeclipst, wenn der Klemmring 24 bereits mit radialer Kraft beaufschlagt wurde, da der Klemmring 24 sonst nur schwer zugänglich wäre.

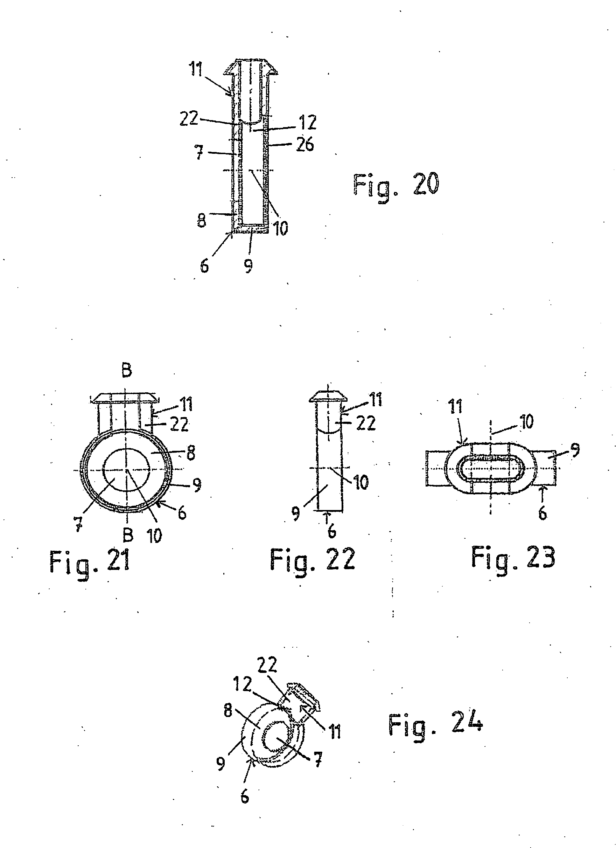

In den Fig. 20 bis 24 ist jeweils das mit dem ersten Teil des Stutzens 11 verbundene Rohrstück 6 des in den Fig. 17 bis 19 gezeigten dritten Schlauchverbindungssystems 1 in verschiedenen Ansichten dargestellt. Der mit der ersten Teil des Stutzens 11 verbundene Spiralschlauch 23 ist nicht dargestellt.

Das Rohrstück 6 weist eine größere Öffnung 26 und eine kleinere Öffnung 7 auf. Mit der größeren Öffnung 26 ist das Rohrstück 6 bis zu dem Rohrstücksanschlag 8 auf das Schlauchende 3 aufsteckbar, wobei der Rohrstücksanschlag 8 durch den radial nach innen gestülpten Rand des Rohrstücks 6 gebildet wird.

Der Mantel 9 des Rohrstücks 6 ist stoffschlüssig, also einstückig, mit einem im 90°-Winkel zur Längsachse 10 des Rohrstücks 6 angeordneten, rohrförmigen ersten Teil des Stutzens 11 verbunden, wobei der Mantel 9 des Rohrstücks 6 einen Durchlass 12 zum Stutzen 11 aufweist. Der erste Teil des Stutzens 11 ist starr ausgebildet.

Das vom Mantel 9 abgewandte Ende des ersten Teils des Stutzens 11 weist auf seiner Außenseite einen kegelförmigen Vorsprung auf, auf den der Spiralschlauch als zweiter Teil des Stutzens 11 aufclipsbar ist.

### Bezugszeichenliste

(ist Bestandteil der Beschreibung)
- 1: Schlauchverbindungssystem
- 2: beheizbarer Schlauch
- 3: Schlauchende
- 4: Medium
- 5: Enden des Heizleiters
- 6: Rohrstück
- 7: Rohrstücköffnung
- 8: Rohrstückanschlag
- 9: Mantel
- 10: Längsachse
- 11: Stutzen
- 12: Durchlass
- 13: Verbindungsstück
- 14: der eine Endabschnitt
- 15: Verbindungsstückanschlag
- 16: der andere Endabschnitt
- 17: Klipsverbindung
- 18: Ende des Stutzens
- 19: elektrische Anschlussvorrichtung
- 20: Klipsverbindung
- 21: Trennsteg
- 22: Ende des Stutzens
- 23: Spiralschlauch
- 24: Klemmring
- 25: Isolierung
- 26: Öffnung

## Patentansprüche

1. Beheizbarer Schlauch (2), der wenigstens einen zur Erwärmung eines im Schlauch (2) fließenden Mediums (4) dienenden elektrischen Heizleiter aufweist, wobei die Enden (5) des Heizleiters mit einer vorgegebenen Länge am Schlauchende (3) freigelegt sind, mit einem Schlauchverbindungssystem (1), **gekennzeichnet durch**
a) ein Rohrstück (6), das bis zu einem den Durchmesser der Rohrstücksöffnung (7) reduzierenden Rohrstücksanschlag (8) auf das Schlauchende (3) aufsteckbar ist, wobei
i) der Durchmesser der nicht aufsteckbaren Öffnung (7) des Rohrstücks (6) kleiner als der Außendurchmesser des Schlauchendes (3) ist, und
ii) der Mantel (9) des Rohrstücks (6) derart mit einem im Winkel zur Längsachse (10) des Rohrstücks (6) angeordneten, rohrförmigen Stutzen (11) verbunden ist, dass in diesem die freigelegten Enden (5) des Heizleiters führbar sind, wobei der Mantel (9) wenigstens einen Durchlass (12) zum Stutzen (11) aufweist, und
b) ein rohrförmiges Verbindungsstück (13), das derart ausgebildet ist, dass es mit seinem Endabschnitt (14) **durch** die nicht aufsteckbare Öffnung (7) des Rohrstücks (6) geführt in die Öffnung des Schlauchendes (3) einfügbar und befestigbar ist, wobei
iii) das Rohrstück (6) derart ausgebildet ist, dass es auf dem Verbindungsstück (13) fixierbar ist, und das Verbindungsstück (13) auf seiner Außenseite einen im Abstand vom einfiigbaren Endabschnitt (14) angeordneten umlaufenden Verbindungsstückanschlag (15) aufweist, der einen größeren Außendurchmesser als die nicht aufsteckbare Öffnung (7) des Rohrstücks (6) aufweist und der das Rohrstück (6) im montierten Zustand des Schlauchverbindungssystems (1) gegen das Schlauchende (3) drückt und dort fixiert ,und
iv) der andere Endabschnitt (16) des rohrförmigen Verbindungsstücks (13) derart ausgebildet ist, dass er mit einem weiteren rohrförmigen Anschluss verbindbar ist.

2. Schlauchverbindungssystem (1) nach Anspruch 1, **dadurch gekennzeichnet, dass** Rohrstück (6) öffen- und schließbar ist und auf dem Verbindungsstück (13) durch Aufclipsen fixierbar ist.

3. Schlauchverbindungssystem (1) nach einem der Ansprüche 1 oder 2, **dadurch gekennzeichnet, dass** der den Durchmesser der nicht aufsteckbaren Rohrstücksöffnung (7) reduzierende Rohrstücksanschlag (8) durch einen im Rohrstück (6) angeordneten Distanzring und/oder durch einen radial nach innen gestülpten Rand des Rohrstücks (6) gebildet ist.

4. Schlauchverbindungssystem (1) nach einem der Ansprüche 1 bis 3, **dadurch gekennzeichnet, dass** der Stutzen (11) stoffschlüssig mit dem Mantel (9) verbunden ist.

5. Schlauchverbindungssystem (1) nach einem der Ansprüche 1 bis 3, **dadurch gekennzeichnet, dass** der Stutzen (11) kraftschlüssig, insbesondere durch Aufclipsen, mit dem Mantel (9) verbunden ist.

6. Schlauchverbindungssystem (1) nach einem der Ansprüche 1 bis 5, **dadurch gekennzeichnet, dass** die Länge des Stutzens (11) der vorgegebenen Länge der freigelegten Enden (5) des Heizleiters angepasst ist.

7. Schlauchverbindungssystem (1) nach einem der Ansprüche 1 bis 6, **dadurch gekennzeichnet, dass** der Stutzen (11) mehrteilig ausgebildet ist, wobei die einzelnen Teile vorzugsweise durch eine Clipverbindung (17)miteinander verbunden sind.

8. Schlauchverbindungssystem (1) nach einem der Ansprüche 1 bis 7, **dadurch gekennzeichnet, dass** das vom Mantel (9) abgewandte Ende (18) des Stutzens (11) eine elektrische Anschlussvorrichtung (19), vorzugsweise in Form eines Steckers, aufweist, an welche die im Stutzen (11) geführten freigelegten Enden (5) des Heizleiters anschließbar sind.

9. Schlauchverbindungssystem (1) nach Anspruch 8, **dadurch gekennzeichnet, dass** das vom Mantel (9) abgewandte Ende (18) des Stutzens (11) und die elektrische Anschlussvorrichtung (19) durch eine Clipverbindung (20) miteinander verbunden sind.

10. Schlauchverbindungssystem (1) nach einem der Ansprüche 1 bis 9, **dadurch gekennzeichnet, dass** der Stutzen (11) der Länge nach wenigstens einen Trennsteg (21) aufweist, welcher die im Stutzen (11) geführten Enden (5) der Heizleiter voneinander trennt.

11. Schlauchverbindungssystem (1) nach einem der Ansprüche 1 bis 9, **dadurch gekennzeichnet, dass** das dem Mantel (9) zugewandte Ende (22) des Stutzens (11) im 90°-Winkel zur Längsachse (10) des Rohrstücks (6) mit dem Mantel (9) verbunden ist.

12. Schlauchverbindungssystem (1) nach einem der Ansprüche 1 bis 10, **dadurch gekennzeichnet, dass** der Stutzen (11) im montierten Zustand nach Art eines 45°- oder 90°-Winkelstücks ausgebildet ist.

13. Schlauchverbindungssystem (1) nach einem der Ansprüche 1 bis 11, **dadurch gekennzeichnet, dass** der Stutzen (11) wenigstens teil- bzw. abschnittsweise flexibel ausgebildet ist.

14. Schlauchverbindungssystem (1) nach Anspruch 12, **dadurch gekennzeichnet, dass** der flexible Teil bzw. Abschnitt aus thermoplastischem Kautschuk besteht.

15. Schlauchverbindungssystem (1) nach Anspruch 12 oder 13, **dadurch gekennzeichnet, dass** der flexible Teil bzw. Abschnitt als Spiralschlauch (23) ausgebildet ist.

16. Schlauchverbindungssystem (1) nach einem der Ansprüche 1 bis 14, **dadurch gekennzeichnet, dass** das Rohrstück (6) und/oder der Stutzen (11) wenigstens teil- oder abschnittsweise aus Polyamid 6.6 bestehen.

17. Schlauchverbindungssystem (1) nach einem der Ansprüche 1 bis 15, **dadurch gekennzeichnet, dass** das Schlauchverbindungssystem (1) einen auf das Schlauchende (3) aufschiebbaren Klemmring (24) umfasst, der im montierten Zustand des Schlauchverbindungssystems (1) den in das Schlauchende (3) eingefügten Endabschnitt (14) des Verbindungsstücks (13) fixiert.

18. Schlauchverbindungssystem (1) nach einem der Ansprüche 1 bis 16, **dadurch gekennzeichnet, dass** das Verbindungsstück (13) eine Druckschlauchtülle ist, wobei der im montierten Zustand des Schlauchverbindungssystems (1) durch die nicht aufsteckbare Öffnung (7) des Rohrstücks (6) geführte Endabschnitt (14) vorzugsweise als Sägezahntülle ausgebildet ist.

## Claims

1. Heatable hose (2), which has at least one electrical heating conductor serving for heating a medium (4) flowing in the hose (2), the ends (5) of the heating conductor being exposed with a predetermined length of the hose end (3), with a hose connection system (1), **characterized by**
a) a tubular piece (6) which can be plugged onto the hose end (3) as far as a tubular-piece stop (8) which reduces the diameter of the tubular-piece orifice (7),
i) the diameter of the non-plug-on orifice (7) of the tubular piece (6) being smaller than the outside diameter of the hose end (3), and
ii) the casing (9) of the tubular piece (6) being connected to a tubular nipple (11) arranged at an angle to the longitudinal axis (10) of the tubular piece (6), in such a way that the exposed ends (5) of the heating conductor can be routed in the said nipple, the casing (9) having at least one passage (12) to the nipple (11), and
b) a tubular connection piece (13) which is designed in such a way that it can be inserted with its end portion (14), led through the non-plug-on orifice (7) of the tubular piece (6), into the orifice of the hose end (3) and can be fastened,
iii) the tubular piece (6) being designed in such a way that it can be fixed on the connection piece (13), and the connection piece (13) having on its outside a peripheral connection-piece stop (15) which is arranged at a distance from the insertable end portion (14) and which has a larger outside diameter than the non-plug-on orifice (7) of the tubular piece (6) and which, in the mounted state of the hose connection system (1), presses the tubular piece (6) against the hose end (3) and fixes it there, and
iv) the other end portion (16) of the tubular connection piece (13) being designed in such a way that it can be connected to a further tubular connection.

2. Hose connection system (1) according to Claim 1, **characterized in that** the tubular piece (6) is openable and closable and can be fixed on the connection piece (13) by being snapped on.

3. Hose connection system (1) according to either one of Claims 1 and 2, **characterized in that** the tubular-piece stop (8) which reduces the diameter of the non-plug-on tubular-piece orifice (7) is formed by a spacer ring arranged in the tubular piece (6) and/or by a radially inward-turned margin of the tubular piece (6).

4. Hose connection system (1) according to one of Claims 1 to 3, **characterized in that** the nipple (11) is connected to the casing (9) in a materially integral manner.

5. Hose connection system (1) according to one of Claims 1 to 3, **characterized in that** the nipple (11) is connected to the casing (9) non-positively, in particular by being snapped on.

6. Hose connection system (1) according to one of Claims 1 to 5, **characterized in that** the length of the nipple (11) is adapted to the predetermined length of the exposed ends (5) of the heating conductor.

7. Hose connection system (1) according to one of Claims 1 to 6, **characterized in that** the nipple (11) is of multi-part form, the individual parts preferably being connected to one another by means of a snap connection (17).

8. Hose connection system (1) according to one of Claims 1 to 7, **characterized in that that** end (18) of the nipple (11) which faces away from the casing (9) has an electrical connecting device (19), preferably in the form of a plug, to which the exposed ends (5) of the heating conductor which are routed in the nipple (11) can be connected.

9. Hose connection system (1) according to Claim 8, **characterized in that that** end (18) of the nipple (11) which faces away from the casing (9) and the electrical connecting device (19) are connected to one another by means of a snap connection (20).

10. Hose connection system (1) according to one of Claims 1 to 9, **characterized in that** the nipple (11) has lengthways at least one separating web (21) which separates from one another those ends (5) of the heating conductor which are routed in the nipple (11).

11. Hose connection system (1) according to one of Claims 1 to 9, **characterized in that that** end (22) of the nipple (11) which faces the casing (9) is connected to the casing (9) at an angle of 90° to the longitudinal axis (10) of the tubular piece (6).

12. Hose connection system (1) according to one of Claims 1 to 10, **characterized in that**, in the mounted state, the nipple (11) is in the form of a 45°- or 90°- angle piece.

13. Hose connection system (1) according to one of Claims 1 to 11, **characterized in that** the nipple (11) is designed to be flexible partially or in portions.

14. Hose connection system (1) according to Claim 12, **characterized in that** the flexible part or portion consists of thermoplastic rubber.

15. Hose connection system (1) according to Claim 12 or 13, **characterized in that** the flexible part or portion is designed as a spiral hose (23).

16. Hose connection system (1) according to one of Claims 1 to 14, **characterized in that** the tubular piece (6) and/or the nipple (11) consist of polyamide 6.6 at least partially or in portions.

17. Hose connection system (1) according to one of Claims 1 to 15, **characterized in that** the hose connection system (1) comprises a clamping ring (24) which can be pushed onto the hose end (3) which, in the mounted state of the hose connection system (1), fixes that end portion (14) of the connection piece (13) which is inserted into the hose end (3).

18. Hose connection system (1) according to one of Claims 1 to 16, **characterized in that** the connection piece (13) is a pressure hose nozzle, the end portion (14), which, in the mounted state of the hose connection system (1), is led through the non-plug-on orifice (7) of the tubular piece (6), preferably being designed as a saw tooth nozzle.

## Revendications

1. Tuyau chauffable (2), qui présente au moins un conducteur chauffant électrique servant à chauffer un fluide (4) s'écoulant dans le tuyau (2), les extrémités (5) du conducteur chauffant étant exposées sur une longueur prédéterminée à l'extrémité du tuyau (3), avec un système de connexion de tuyau (1), **caractérisé par** :
a) une pièce tubulaire (6) qui peut être enfichée sur l'extrémité du tuyau (3) jusqu'à une butée de pièce tubulaire (8) réduisant le diamètre de l'ouverture (7) de la pièce tubulaire,
i) le diamètre de l'ouverture (7) de la pièce tubulaire (6) non enfichable étant inférieur au diamètre extérieur de l'extrémité du tuyau (3), et
ii) l'enveloppe (9) de la pièce tubulaire (6) étant connectée à un ajutage tubulaire (11) disposé suivant un angle par rapport à l'axe longitudinal (10) de la pièce tubulaire (6), de telle sorte que les extrémités exposées (5) du conducteur chauffant puissent être guidées dans cet ajutage, l'enveloppe (9) présentant au moins un passage (12) allant à l'ajutage (11), et
b) une pièce de connexion tubulaire (13), qui est réalisée de telle sorte qu'elle puisse être introduite et fixée avec sa portion d'extrémité (14) guidée à travers l'ouverture (7) non enfichable de la pièce tubulaire (6), dans l'ouverture de l'extrémité de tuyau (3),
iii) la pièce tubulaire (6) étant réalisée de telle sorte qu'elle puisse être fixée sur la pièce de connexion (13), et la pièce de connexion (13) présentant, sur son côté extérieur, une butée de pièce de connexion (15) périphérique disposée à distance d'une portion d'extrémité insérable (14), qui présente un plus grand diamètre extérieur que l'ouverture non enfichable (7) de la pièce tubulaire (6) et qui presse et fixe la pièce tubulaire (6) dans l'état monté du système de connexion de tuyau (1) contre l'extrémité du tuyau (3), et
iv) l'autre portion d'extrémité (16) de la pièce de connexion tubulaire (13) étant réalisée de telle sorte qu'elle puisse être connectée à un autre raccord tubulaire.

2. Système de connexion de tuyau (1) selon la revendication 1, **caractérisé en ce que** la pièce tubulaire (6) peut etre ouverte et fermée et peut etre fixée par enclipsage sur la pièce de connexion (13).

3. Système de connexion de tuyau (1) selon la revendication 1 ou 2, **caractérisé en ce que** la butée de pièce tubulaire (8) réduisant le diamètre de l'ouverture de pièce tubulaire (7) non enfichable est formée par une bague d'espacement disposée dans la pièce tubulaire (6) et/ou par un bord de la pièce tubulaire (6) recourbé radialement vers l'intérieur.

4. Système de connexion de tuyau (1) selon l'une quelconque des revendications 1 à 3, **caractérisé en ce que** l'ajutage (11) est connecté par liaison de matière à l'enveloppe (9).

5. Système de connexion de tuyau (1) selon l'une quelconque des revendications 1 à 3, **caractérisé en ce que** l'ajutage (11) est connecté par engagement positif, notamment par enclipsage, à l'enveloppe (9).

6. Système de connexion de tuyau (1) selon l'une quelconque des revendications 1 à 5, **caractérisé en ce que** la longueur de l'ajutage (11) est adaptée à la longueur prédéfinie des extrémités exposées (5) du conducteur chauffant.

7. Système de connexion de tuyau (1) selon l'une quelconque des revendications 1 à 6, **caractérisé en ce que** l'ajutage (11) est réalisé en plusieurs parties, les parties individuelles étant de préférence connectées les unes aux autres par une connexion par enclipsage (17).

8. Système de connexion de tuyau (1) selon l'une quelconque des revendications 1 à 7, **caractérisé en ce que** l'extrémité (18) de l'ajutage (11) opposée à l'enveloppe (9) présente un dispositif de raccordement électrique (19), de préférence sous forme de connecteur mâle, auquel peuvent se raccorder les extrémités exposées (5) du conducteur chauffant guidées dans l'ajutage (11).

9. Système de connexion de tuyau (1) selon la revendication 8, **caractérisé en ce que** l'extrémité (18) de l'ajutage (11) opposée à l'enveloppe (9) et le dispositif de raccordement électrique (19) sont connectés l'un à l'autre par une connexion par enclipsage (20).

10. Système de connexion de tuyau (1) selon l'une quelconque des revendications 1 à 9, **caractérisé en ce que** l'ajutage (11) présente, en fonction de sa longueur, au moins une nervure de séparation (21), qui sépare l'une de l'autre les extrémités (5) du conducteur chauffant qui sont guidées dans l'ajutage (11).

11. Système de connexion de tuyau (1) selon l'une quelconque des revendications 1 à 9, **caractérisé en ce que** l'extrémité (22) de l'ajutage (11) tournée vers l'enveloppe (9) est connectée à l'enveloppe (9) suivant un angle de 90° par rapport à l'axe longitudinal (10) de la pièce tubulaire (6).

12. Système de connexion de tuyau (1) selon l'une quelconque des revendications 1 à 10, **caractérisé en ce que** l'ajutage (11) est réalisé dans l'état monté à la manière d'une pièce coudée à 45° ou à 90°.

13. Système de connexion de tuyau (1) selon l'une quelconque des revendications 1 à 11, **caractérisé en ce que** l'ajutage (11) est réalisé sous forme flexible, au moins en partie ou sur une section.

14. Système de connexion de tuyau (1) selon la revendication 12, **caractérisé en ce que** la partie ou la section flexible se compose de caoutchouc thermoplastique.

15. Système de connexion de tuyau (1) selon la revendication 12 ou 13, **caractérisé en ce que** la partie ou section flexible est réalisée sous forme de tuyau en spirale (23).

16. Système de connexion de tuyau (1) selon l'une quelconque des revendications 1 à 14, **caractérisé en ce que** la pièce tubulaire (6) et/ou l'ajutage (11) se composent de polyamide 6.6 au moins en partie ou sur une section.

17. Système de connexion de tuyau (1) selon l'une quelconque des revendications 1 à 15, **caractérisé en ce que** le système de connexion de tuyau (1) présente un collier de serrage (24) pouvant être poussé sur l'extrémité du tuyau (3), lequel, dans l'état monté du système de connexion de tuyau (1), fixe la section d'extrémité (14) de la pièce de connexion (13) insérée dans l'extrémité du tuyau (3).

18. Système de connexion de tuyau (1) selon l'une quelconque des revendications 1 à 16, **caractérisé en ce que** la pièce de connexion (13) est une gaine de tuyau sous pression, la section d'extrémité (14) guidée à travers l'ouverture (7) non enfichable de la pièce tubulaire (6) dans l'état monté du système de connexion de tuyau (1) étant réalisée de préférence sous forme de gaine à dents de scie.
